(19) Europäisches Patentamt
European Patent Office
Office européen des brevets

(11) **EP 3 385 746 A1**

(12) **EUROPÄISCHE PATENTANMELDUNG**

(43) Veröffentlichungstag:
**10.10.2018  Patentblatt 2018/41**

(51) Int Cl.:
*G01S 7/02* *(2006.01)*  *G01S 17/08* *(2006.01)*
*G01S 7/497* *(2006.01)*  *G01S 7/51* *(2006.01)*

(21) Anmeldenummer: **18156994.8**

(22) Anmeldetag: **15.02.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD TN**

(30) Priorität: **07.04.2017  DE 102017107537**

(71) Anmelder: **UMAREX GmbH & Co. KG**
**59757 Arnsberg (DE)**

(72) Erfinder:
• **WONISCH, Martin**
  **59755 Arnsberg (DE)**
• **PFLAUMER, Eyck**
  **59755 Arnberg (DE)**

(74) Vertreter: **Schäperklaus, Jochen et al**
**Fritz Patent- und Rechtsanwälte**
**Partnerschaft mbB**
**Postfach 1580**
**59705 Arnsberg (DE)**

(54) **ENTFERNUNGSMESSVORRICHTUNG**

(57)    Entfernungsmessvorrichtung, umfassend eine Laserlichtquelle zur Erzeugung eines für eine Entfernungsmessung geeigneten Laserstrahls, Sensormittel für die Erfassung der von einem Messobjekt zurückreflektierten Laserstrahlung derart, dass aus den erfassten Messdaten die Entfernung zwischen der Entfernungsmessvorrichtung und dem Messobjekt ermittelt werden kann, eine Kamera, mit der ein Bild des Messobjekts erfasst werden kann, ein Display, auf dem ein von der Kamera erfasstes Bild angezeigt werden kann, wobei die Entfernungsmessvorrichtung derart gestaltet ist, dass während des Betriebs der Entfernungsmessvorrichtung auf dem Display kein Bild der auf dem Messobjekt auftreffenden Laserstrahlung angezeigt wird.

Fig. 1

EP 3 385 746 A1

**Beschreibung**

Die vorliegende Erfindung betrifft eine Entfernungsmessvorrichtung gemäß dem Oberbegriff des Anspruchs 1.

Eine derartige Entfernungsmessvorrichtung ist aus der EP 1 407 227 B1 bekannt. Die darin beschriebene Entfernungsmessvorrichtung umfasst eine Laserlichtquelle zur Erzeugung eines für eine Entfernungsmessung geeigneten Laserstrahls, Sensormittel für die Erfassung der von einem Messobjekt zurückreflektierten Laserstrahlung derart, dass aus den erfassten Messdaten die Entfernung zwischen der Entfernungsmessvorrichtung und dem Messobjekt ermittelt werden kann, eine Kamera, mit der ein Bild des Messobjekts erfasst werden kann, sowie ein Display, auf dem ein von der Kamera erfasstes Bild angezeigt werden kann. Durch die Verarbeitung der erfassten Bilder kann auf dem Display ein Bild der auf dem Messobjekt auftreffenden Laserstrahlung angezeigt werden. Gleichzeitig wird eine Visierhilfe eingeblendet, die dem Benutzer des Anvisieren des Messobjekts erleichtern soll. Dabei können die Visierhilfe und der angezeigte Auftreffpunkt des Laserstrahls auf dem Messobjekt an unterschiedlichen Stellen des Displays erscheinen, so dass der Benutzer irritiert wird.

Das der vorliegenden Erfindung zugrunde liegende Problem ist die Schaffung einer Entfernungsmessvorrichtung der eingangs genannten Art, die dem Benutzer mit einfachen Mitteln ein Anvisieren des Messobjekts ermöglicht.

Dies wird erfindungsgemäß durch eine Entfernungsmessvorrichtung der eingangs genannten Art mit den kennzeichnenden Merkmalen des Anspruchs 1 erreicht. Die Unteransprüche betreffen bevorzugte Ausgestaltungen der Erfindung.

Gemäß Anspruch 1 ist vorgesehen, dass die Entfernungsmessvorrichtung derart gestaltet ist, dass während des Betriebs der Entfernungsmessvorrichtung auf dem Display kein Bild der auf dem Messobjekt auftreffenden Laserstrahlung angezeigt wird. Dadurch wird gewährleistet, dass der Benutzer nicht von unterschiedlichen Zielmarkierungen auf dem Display irritiert wird.

Dabei kann beispielsweise vorgesehen sein, dass die Entfernungsmessvorrichtung Umschaltmittel umfasst, die die Entfernungsmessvorrichtung von einem ersten Zustand, in dem die Laserlichtquelle Laserstrahlung emittiert und die Kamera kein Bild erfasst, in einen zweiten Zustand überführen können, in dem die Laserlichtquelle keine Laserstrahlung emittiert und die Kamera mindestens ein Bild erfasst. Diese Gestaltung kann mit einfachen Mitteln verhindern, dass der Laserstrahl auf dem Display auftaucht. Die Umschaltmittel können beispielsweise eine für den Benutzer einfach zugängliche Taste sein.

Es besteht weiterhin die Möglichkeit, dass auf dem Display eine Visierhilfe, insbesondere in Form eines Absehens, eingeblendet werden kann, die dem Benutzer den ungefähren Auftreffpunkt des Laserstrahls auf dem Messobjekt verdeutlicht. Die Visierhilfe kann dem Benutzer anstelle des Laserstrahls ein Anvisieren des Messobjekts ermöglichen.

Es kann vorgesehen sein, dass auf dem Display die Visierhilfe in einer Farbe angezeigt wird, die einen vergleichsweise großen Kontrast zu dem auf dem Display angezeigten Bild aufweist, insbesondere wobei die Visierhilfe zumindest teilweise Komplementärfarben von auf dem Display angezeigten Teilbereichen des Bildes aufweist. Dadurch wird die Visierhilfe auch unter ungünstigen Lichtverhältnissen besser sichtbar.

Es besteht die Möglichkeit, dass der Benutzer zwischen einer Mehrzahl unterschiedlicher Visierhilfen, insbesondere zwischen einer Mehrzahl unterschiedlicher Absehen, auswählen kann. Auch dadurch kann die Sichtbarkeit der Visierhilfe erhöht werden.

Es kann vorgesehen sein, dass die Visierhilfe auf dem Display von dem Benutzer an unterschiedliche Positionen bewegt werden kann, insbesondere wobei dadurch auch eine Kalibrierung erreicht werden kann. Weiterhin kann der Benutzer zwischen unterschiedlichen Zoomstufen des Displays wechseln. Beide Maßnahmen können die Anzeige des Messpunktes durch die Visierhilfe erleichtern.

Es besteht die Möglichkeit, dass die Ermittlung der Position des Auftreffpunkts des Laserstrahls auf dem Messobjekt unter Berücksichtigung der Parallaxe erfolgt, die sich durch den Abstand der Kamera von der Austrittsapertur der Laserlichtquelle ergibt. Dadurch wird die Genauigkeit, mit der die Visierhilfe dem Benutzer die Position des Messpunktes anzeigt, erhöht.

Es kann vorgesehen sein, dass die ermittelte Entfernung zwischen der Entfernungsmessvorrichtung und dem Messobjekt auf dem Display angezeigt werden kann. Vorzugsweise kann ein Bild abgespeichert werden kann, das insbesondere das Messobjekt und die eingeblendete Entfernung zum Messobjekt sowie gegebenenfalls zusätzlich die Visierhilfe zeigt. Auf diese Weise lässt sich im Nachhinein ermitteln, welcher Abstand zu welchem Messpunkt ermittelt wurde.

Es besteht die Möglichkeit, dass die Entfernungsmessvorrichtung Beschleunigungssensormittel und/oder Neigungssensormittel umfasst. Beispielsweise wenn die Beschleunigungssensormittel und/oder Neigungssensormittel ein Verkippen oder Bewegen des Messgeräts signalisieren, kann der Benutzer den Messvorgang abbrechen.

Es kann vorgesehen sein, dass die Kamera und das Display in einem separaten Gerät, wie beispielsweise einem Smartphone untergebracht sind, das mit den übrigen, beispielsweise in einem Gerät zusammengefassten Komponenten der Entfernungsmessvorrichtung beispielsweise über eine Bluetooth-Verbindung kommuniziert.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:

Fig. 1 bis Fig. 4     schematische Darstellungen zur Verdeutlichung der Parallaxe;

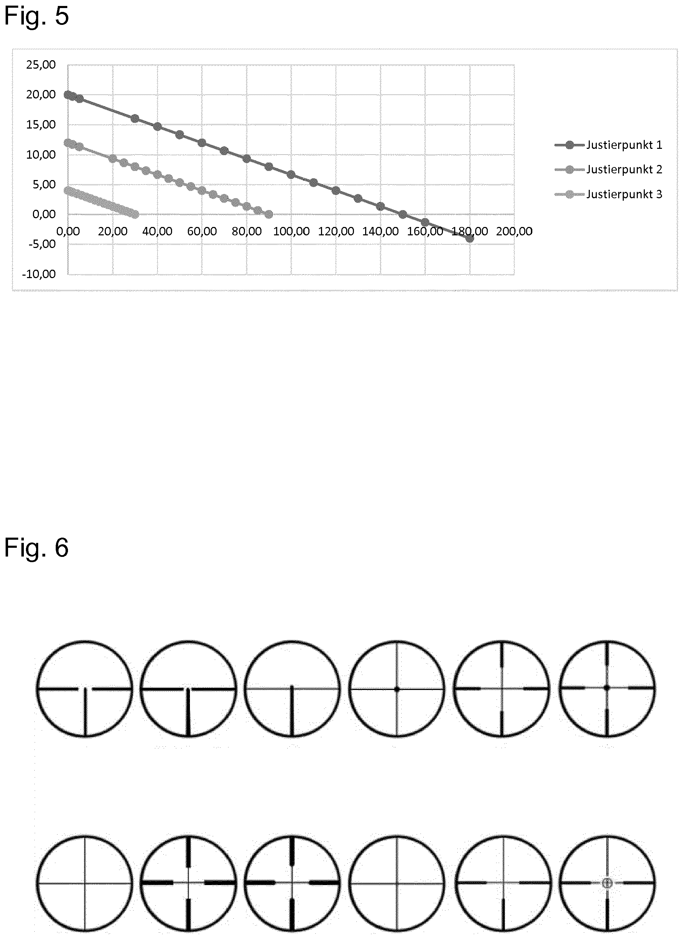

Fig. 5                    eine Simulation des Parallaxefehlers;

Fig. 6                    verschiedene Absehen für eine erfindungsgemäße Entfernungsmessvorrichtung.

Es wird ein Verfahren zur visuellen Ortsbestimmung eines Messpunktes mittels einer Kamera für Messgeräte vorgestellt.

Viele Messgeräte messen physikalische Werte innerhalb oder auf einem kleinen, begrenzten räumlichen Zielbereich, wie z.B. bei der Abstandsmessung mit Laser auf Objekten, der Feuchte- und Temperaturmessungen auf Wänden, der Winkelmessung auf einer geneigten Fläche, und vieles mehr.

Die Kamera stellt in diesen Fällen eine visuelle Ausrichthilfe des eigentlichen Messpunktes auf die gewünschte Oberfläche zur Verfügung. Dazu werden visuelle Marker in das Bild eingeblendet, welche die Istposition des Sensors visualisieren sollen.

Die visuellen Bildmarker werden im weiteren Absehen benannt, weil diese Funktion aus dem Bereich der Visiereinrichtungen die ähnlichen Aufgaben erfüllt en.

Im Falle des bevorzugten Verfahrens, mit Lasermessung, wird ein sehr kleiner Laserpunkt auf einer Oberfläche zur Messung verwendet. Ziel des Verfahrens ist es nun diesen messenden Laserpunkt und das virtuelle Absehen im Kamerabild deckungsgleich übereinander auszurichten.

Durch die Parallaxefehler von Kamera und Sensor, sowie durch die Kameraoptik ist in der Praxis jedoch immer mit einer mehr oder weniger großen Abweichung zu rechnen.

In der Regel ist die Relation so, dass bei größeren Abständen auch größere Abweichungen akzeptabel sind, weil die Visierung durch mechanisches Verwackeln oder Einfluss der Atmosphäre beeinflusst werden. Schon sehr geringe Winkelfehler in der Ausrichtung haben auf größere Entfernungen einen sehr großen Einfluss.

Daher ist es bei mechanisch oder elektronisch vorausgerichteten Geräten sinnvoll diesen Laserpunkt und die Kameramarker nicht gleichzeitig im Bild anzuzeigen, weil dort die Abweichung unter Umständen zu stark sichtbar wäre.

In dem Stand der Technik gemäß EP 1 407 227 B1 wird der eigentliche Messlaser als Pilotlaser für diese Aufgabe mitbenutzt, aber es sind auch Ausprägungen denkbar für beliebige Entfernungsmessmethoden, in denen kein Pilotlaser zur Zielmarkierung benutzt wird, welche dann nur mit einem Kamerasystem und einem virtuellen Absehen ausgestattet würden.

Dieses Verfahren ist theoretisch in der Lage das virtuelle Absehen an die exakte Position des Messpunktes zu legen, es braucht dazu allerdings den Pilotlaser und wird eine recht aufwändige Bildverarbeitung, sehr gute Kameraauflösung und -qualität notwendig machen um dieses Ziel zu Erreichen.

Ein solches Kamerasystem mit virtuellem Absehen würde dann die Position im Bild durch die Extraktion der Laserpunktposition aus dem Kamerabild selbst, und nicht mittels einer Abschätzung der Entfernung in der Parallaxe korrigiert werden.

Die Methoden der Bildverarbeitung zur Extraktion des Laserpunktes im Bild können insbesondere für größere Entfernungen, bei starkem Umgebungslicht, bei stark strukturierten Untergründen, oder auch bei farblich und vom Reflektionsgrad ungünstigen Hintergründen sehr aufwendig werden, und unter solchen Umständen kann eine gute Bestimmbarkeit der Laserposition nicht in allen Fällen garantiert werden.

Deshalb soll die Erfindung eine vereinfachte und sicherere Methode zur virtuellen Bildmarkierung bei Entfernungsmessgeräten oder auch für andere beliebige Messverfahren welche auf kleine bis größere Messentfernungen arbeiten, wie z.B. IR-Thermometer, Lidar, Wärmebildkameras, usw., bereitstellen, welche auf den Pilotlaser verzichten können.

Die Ausführung des Messsensor ist in der bevorzugten Ausführung ein Laser-Entfernungsmesssystem, welches in verschiedenen Ausführungen Stand der Technik ist.

Das neue Verfahren wird aber auch in gleicher Weise mit alternativen Entfernungsmess-Verfahren in gleicher Weise arbeiten, mit Messung der Signallaufzeit elektromagnetischer Wellen, mit Messung des Phasenwinkels elektromagnetischer Wellen, Ultraschall-Signallaufzeit, Triangulation von elektromagnetischen Wellen oder Triangulation von perspektivischen Kamerabildern mit zwei oder mehreren Kamerasensoren.

Weiterhin sind alle Messsysteme welche auf entsprechenden Abstand berührungslos auf ein Zielobjekt arbeiten dadurch ebenfalls abgedeckt, wie z.B. IR Infrarotthermometer, Lidar, Wärmebildkameras, etc.

Zur Verhinderung der bei Pilotlaser geführten Geräten, mit möglichen, irritierenden Abweichungen zwischen Pilotlaser und virtuellem Absehen, sollte die Erfindung durch geeignete Methoden sicherstellen das Laser und Absehen nicht gleichzeitig im Kamerabild sichtbar sind. Das kann z.B. durch eine mechanische oder elektronische Verriegelung von Laser und Kamera geschehen, weil die Kamera zur Zielsuche notwendig ist, nicht aber für die Messung selbst, und umgekehrt.

Technisch liegen die Abstände von Kamera und entsprechenden Sensoren heutzutage innerhalb weniger Zentimeter, so das der Parallaxe-Effekt bereits stark reduziert ist.

Der Parallaxe-Fehler Effekt wird auf größeren Entfernungen weiter vernachlässigbar und ist auf näheren und mittleren Entfernungen zur Kamera zu beachten.

Weil die Zielfunktion der Kamera insbesondere auf größeren Entfernungen sinnvoll eingesetzt wird ist eine aufwändige elektronische Ermittlung der Positionen nicht unbedingt notwendig, und es kann durch ein vereinfachtes Verfahren abgelöst werden.

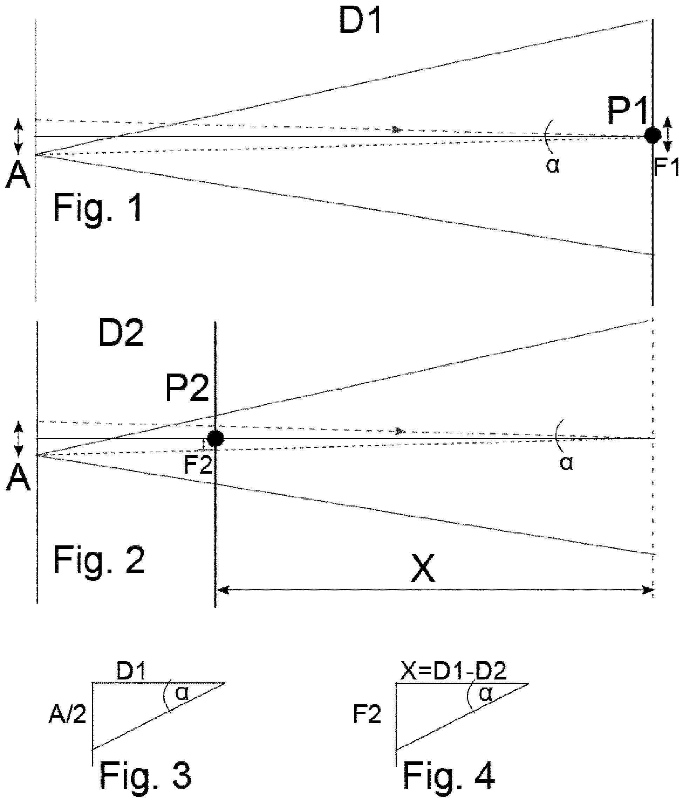

Die Verhältnisse bei der Parallaxe sind wie in Fig. 1 und Fig. 2 beschrieben. Idealerweise wird die separate Justierung des Messlasers und der Kamera in Richtung eines Fluchtpunktes P1 auf einen Justierabstand welcher im Idealfall im Unendlichen liegt ausgelegt, in der Realität werden aber Fluchtpunkte in endlichen Abständen für die Justage verwendet, um die Justage und Kamerafokussierung auf diesen Punkten zu optimieren. Durch die separate Justierung des Messlasers und der Kamera in Richtung eines Fluchtpunktes P1 auf einen Justierabstand D1 ergibt sich theoretisch eine abweichungsfreie Positionierung des echten Messpunktes und des virtuellen Absehens in der Kamera bei dem Messabstand D1.

Wir können Annehmen das bei einer solchen Justage auf einen idealen Messabstand D1, welcher der halben, maximalen Messentfernung des Messsystems entspricht, die Abweichung des virtuellen Absehens (F1) in der Kamera zum realen Messpunkt gleich 0 ist.

Wenn wir uns mit dem Messabstand von dem Justierabstand D1 entweder nähern (D2=D1-X) oder entfernen (D2=D1+X) werden Messfehler (F2) des Absehens entstehen, entweder in negativer oder positiver Richtung aber mit gleichem Abstand von der gedachten Nulllinie.

Diese Messfehler F2 hängen nun ursächlich mit dem Abstand zwischen Messsensor und Kamera (A) ab, ist es möglich diesen Abstand zu 0 zu machen bleiben auch die Parallaxefehler bei 0.

Im realen Messsystem ist aber ein Abstand A zwischen Messsystem und Kamera vorhanden, welcher mit dem halben Abstand zur gedachten Nulllinie in die Berechnung des Winkels a eingeht.

Ausgehend vom Justierabstand D1, kann mit der Tangensfunktion der Winkel $\alpha$ nach der folgenden Formel bestimmt werden (Fig. 3):

$$\tan \alpha = \tfrac{1}{2} * (A / D1)$$

und daraus ergibt sich der Winkel $\alpha$

$$\alpha = \operatorname{atan}(\tfrac{1}{2} * (A / D1))$$

Beispielrechnung:

$$A = 20mm, D1 = 40m$$

$$\alpha = \operatorname{atan}(\tfrac{1}{2} * (20mm / 40m)) = 0{,}0143239°$$

Wird nun mit dem so justierten Messsystem ein Objekt in der Messebene D2 anvisiert (Fig. 2), so entsteht durch die Parallaxeverschiebung eine Abweichung von F2 zur gedachten Nulllinie.

$$\tan \alpha = \tfrac{1}{2} * (F2 / (D1-D2))$$

und daraus ergibt sich die Abweichung F2

$$F2 = 2 * (D1-D2) * \tan(\operatorname{atan}(\tfrac{1}{2} * (A / D1)))$$

$$F2 = (D1-D2) * (A / D1)$$

Beispielrechnung:

$$A = 20mm, D1 = 40m, D2 = 5m$$

$$F2 = (40m - 5m) * (20mm / 40m) = 17{,}5 \ mm$$

Eine Simulation der Verhältnisse mit realistischen Werten ergibt die folgende Tabelle:

| Justierabstand | D1 [m] | 150 | | | | | | |
|---|---|---|---|---|---|---|---|---|
| Abstand Sensor/Kamera | A [mm] | 20 | | | | | | |
| | | | | | | | | |
| Simulation Meßabständ | D2 [m] | 150...0 | Parallaxefehler | F2 = (D1-D2)*(A/D1) | | | | |
| | Justierpunkt 1 | | | Justierpunkt 2 | | | Justierpunkt 3 | |
| | D2 [m] | F2 [mm] | | D2 [m] | F2 [mm] | | D2 [m] | F2 [mm] |
| **Maximaler Meßabstand** | **180,00** | **-4,00** | | **90,00** | **0,00** | | **30,00** | **0,00** |
| | 160,00 | -1,33 | | 85,00 | 0,67 | | 28,00 | 0,27 |
| **Justierabstand** | 150,00 | 0,00 | | 80,00 | 1,33 | | 26,00 | 0,53 |
| | 140,00 | 1,33 | | 75,00 | 2,00 | | 24,00 | 0,80 |
| | 130,00 | 2,67 | | 70,00 | 2,67 | | 22,00 | 1,07 |
| | 120,00 | 4,00 | | 65,00 | 3,33 | | 20,00 | 1,33 |
| | 110,00 | 5,33 | | 60,00 | 4,00 | | 18,00 | 1,60 |
| | 100,00 | 6,67 | | 55,00 | 4,67 | | 16,00 | 1,87 |
| **Limit F2'** | **90,00** | **8,00** | | 50,00 | 5,33 | | 14,00 | 2,13 |
| | 80,00 | 9,33 | | 45,00 | 6,00 | | 12,00 | 2,40 |
| | 70,00 | 10,67 | | 40,00 | 6,67 | | 10,00 | 2,67 |
| | 60,00 | 12,00 | | 35,00 | 7,33 | | 8,00 | 2,93 |
| | 50,00 | 13,33 | **Limit F2"** | **30,00** | **8,00** | | 6,00 | 3,20 |
| | 40,00 | 14,67 | | 25,00 | 8,67 | | 4,00 | 3,47 |
| | 30,00 | 16,00 | | 20,00 | 9,33 | | 2,00 | 3,73 |
| | 5,00 | 19,33 | | 5,00 | 11,33 | | **1,00** | **3,87** |
| | 2,00 | 19,73 | | 2,00 | 11,73 | | 0,50 | 3,93 |
| **Minimaler Meßabstand** | **0,00** | **20,00** | | **0,00** | **12,00** | | **0,00** | **4,00** |

Die Simulation zeigt das die Parallaxefehler linear mit dem Abstand zum Justierabstand abhängen, also ist ein Justierabstand möglichst in der Nähe der maximalen Messentfernung von Vorteil. Liegt die maximale Messentfernung über dem Justierabstand wird der Fehler durch Parallaxe F2 in der negativen Richtung entstehen, dies ist aber durch den geringen Messfehler durchaus akzeptabel.

Bei einem großen Justierabstand kann somit ein weiter Bereich von Messabständen gewählt werden, welche mit akzeptablem Parallaxefehlern F2 abgedeckt werden.

Erst bei kleinen Messabständen wird ein zu großer Parallaxefehler entstehen, welcher durch weitere Justierpunkte optimiert werden könnte.

Dadurch kann es notwendig sein mehrere Justierpunkte zu wählen, mit kürzeren Justierabständen, wie im Beispiel oben veranschaulicht.

Wird z.B. die Akzeptanzgrenze für den Parallaxefehler auf 8mm festgelegt, dann wird der erste Justierpunkt 1, mit Justierabstand = 150m bis herunter zu Limit F2' = 90m einsetzbar sein, der Justierpunkt 2, mit Justierabstand = 90m bis herunter zu Limit F2" = 30m einsetzbar sein, und der Justierpunkt 3, mit Justierabstand = 30m ist dann bis herunter zu 0m einsetzbar.

Das Beispiel oben soll das generelle Prinzip verdeutlichen, in der Praxis würde man insbesondere im unteren Abstandsbereichen eine höhere Genauigkeit vorgeben, und evtl. in größeren Abständen eine höhere Abweichung zulassen, so das die Akzeptanzgrenze sich entsprechend adaptiv anpassen würden.

Zu der Betrachtung der Parallaxefehler kommt auch die Eigenschaft der Kameraauflösung hinzu, welche auf die verschiedenen Messabstände über solche weite Bereiche auch verschiedene Zoomstufen haben sollte um auf jedem Messabstand ein guter Bild darstellen zu können.

Durch diese beiden Eigenschaften gibt es ein oder mehrere Justierpunkte, welche die Parallaxekorrektur und die Kamerazoom-Stufen berücksichtigen.

In der Tabelle sind mögliche Parameter die zu den verschiedenen Zoom- und Justagepunkten verwaltet werden können abgelegt.

| Eigenschaften Virtuelles Absehen | Justierpunkt 1 | Justierpunkt 1 | ... | Justierpunkt n | |
|---|---|---|---|---|---|
| Justageposition X | VX1 | VX2 | | VXn | Positioniert das virtuelle Absehen im Kamerabereich |
| Justageposition Y | VY1 | VY2 | | VYn | |
| Absehen-Typ | VT1 | VT2 | | VTn | Mögliche, verschiedene Absehentypen je nach Abstand |
| Justierabstand | JA1 | JA2 | | JAn | Vorgegebener Justierabstand an den versch. Justierpunkten |
| Max. Parallaxe-Limit F2 | PL1 | PL2 | | PLn | Vorgegebener, akzeptierter Parallaxefehler an den versch. Justierpunkten |
| Kamera-Zoomstufe Kamera-Ausschnitte | ZS1 | ZS2 | | ZSn | Vorgegebene Kamerazoomstufe an den versch. Justierpunkten |
| Ausschnittposition X | KX1 | KX2 | | KXn | Mögliche Kameraauschnitte an den versch. Justierpunkten |
| Ausschnittposition Y | KY1 | KY2 | | KYn | |
| Ausschnittgröße W | KW1 | KW2 | | KWn | Mögliche Kameraauschnitte an den versch. Justierpunkten |
| Ausschnittgröße H | KH1 | KH2 | | KHn | |

Durch die zentralen Justagepunkte kann der Verhalten des Absehens und des Kamera-Zooms individuell gesteuert werden, je nachdem welche Meßentfernung vorgewählt worden ist.

Die Vorwahl der Justagepunkte kann durch einfache Gerätetaste gesteuert werden, welche die Kamera-Zoomstufe an die jeweilige Aufgabe anpasst, dadurch erhält dann auch das Absehen den entsprechenden, passenden Parametersatz.

So können z.B. ein, zwei oder mehrere Justagepunkte benutzt werden, je nach Gerätekategorie, welche dann die Meßaufgabe z.B. in Nach, Mittel und Fern grob vorselektieren kann.

Diese Vorauswahl wird vom Benutzer im Wesentlichen als Auswahl der Zoomstufe empfunden, um damit das Ziel passend auf dem Bildschirm darzustellen, wobei dann zusätzlich zur Darstelung auch die Positionen und das Verhalten des Absehens eingestellt wird um Parallaxefehler zu minimieren.

Die Funktionen des Absehens können sich auf verschiedenen Justagepunkten durch verschiedene Typen unterscheiden, um je nach Meßentfernung die optimale Visualisierung einzustellen.

Diese und weitere, je nach Anwendung optimierte Absehentypen können vom Benutzer vorausgewählt werden, und in Abhängigkeit von den Justagepunkten automatisch aktiviert werden.

Die Bilder oben geben beispielhaft eine Übersicht über mögliche Absehentypen an, es sind aber weitere Ausbildungsformen, z.B. rechteckige, denkbar.

Zur besseren Kontrastierung sollte das Absehen auch in verschiedenen Farben dargestellt werden, auch in Kontrast zum jeweiligen Bildhintergrund.

Dazu kann im Bereich des Absehens mithilfe einer Bildverarbeitung der beteiligten Pixel die dominante Farbe in Echtzeit unter dem Absehen bestimmt werden, und die Absehenfarbe kann entsprechend dynamisch auf eine Komplementärfarbe automatisch eingestellt werden.

Zur Bestimmung der dominanten Farbe gibt es entsprechende bekannte algorithmische Verfahren welche auf der Bild-Farbsegmentierung, Farbbinning und Quantisierung beruhen.

Alternativ kann auch die Methode des XORing des Bildhintergrundes mit dem Absehensymbol verwendet werden, um einen guten Kontrast zu Erreichen.

Die Messungen können die entsprechenden Kameraaufnahmen mit dem virtuellen Absehen zusätzlich zur Dokumentation abspeichern. Dazu ist es sinnvoll in die Kameraaufnahme einer Messung das jeweilige aktuelle Datum und Uhrzeit als Zeitstempel sichtbar anzuzeigen.

Optional ist der eigentlich Meßwert der gemessenen Entfernung mit in die Kameraaufnahme eingeblendet, so das zur Dokumentation ein visuelles Zielbild mit den entsprechenden Daten gespeichert wird zur weiteren Verwendung.

Vorzugsweise wird die Kameraaufnahme in ein übliches, komprimiertes Bildformat wie JPG, PNG, etc. gespeichert, um damit die Weiterverarbeitung mit üblichen Bildverarbeitungsprogrammen zu gewährleisten.

In den Bilddaten könnten optional alle gemessenen Daten und Parameter, wie Meßwert, Umgebungstemperatur, Umgebungsfeuchte, gewählter Justagepunkt mit dessen Bild- und Zoomparameters, Zeitstempel, etc. mitgespeichert werden. Bilddaten wie JPG erlauben solche versteckten Daten, in anderen Formaten könnten diese Betriebsparameter und Messwerte in eine separate Datei gespeichert werden.

Um die erhöhte Unsicherheit einer fehlenden Bildanalyse von einem Pilotlaser und bildverarbeitender Kamera auszugleichen kann zusätzlich ein 3D Gyrosensor und/oder Tiltsensor benutzt werden, um das "Verwackeln" einer Aufnahme und Messung festzustellen, und eine Warnung abzugeben.

**Patentansprüche**

1. Entfernungsmessvorrichtung, umfassend

   - eine Laserlichtquelle zur Erzeugung eines für eine Entfernungsmessung geeigneten Laserstrahls,
   - Sensormittel für die Erfassung der von einem Messobjekt zurückreflektierten Laserstrahlung derart, dass aus den erfassten Messdaten die Entfernung zwischen der Entfernungsmessvorrichtung und dem Messobjekt ermittelt werden kann,
   - eine Kamera, mit der ein Bild des Messobjekts erfasst werden kann,
   - ein Display, auf dem ein von der Kamera erfasstes Bild angezeigt werden kann,

   **dadurch gekennzeichnet, dass** die Entfernungsmessvorrichtung derart gestaltet ist, dass während des Betriebs der Entfernungsmessvorrichtung auf dem Display kein Bild der auf dem Messobjekt auftreffenden Laserstrahlung angezeigt wird.

2. Entfernungsmessvorrichtung nach Anspruch 1, **dadurch gekennzeichnet, dass** die Entfernungsmessvorrichtung Umschaltmittel umfasst, die die Entfernungsmessvorrichtung von einem ersten Zustand, in dem die Laserlichtquelle Laserstrahlung emittiert und die Kamera kein Bild erfasst, in einen zweiten Zustand überführen können, in dem die Laserlichtquelle keine Laserstrahlung emittiert und die Kamera mindestens ein Bild erfasst.

3. Entfernungsmessvorrichtung nach einem der Ansprüche 1 oder 2, **dadurch gekennzeichnet, dass** auf dem Display eine Visierhilfe, insbesondere in Form eines Absehens, eingeblendet werden kann, die dem Benutzer den ungefähren Auftreffpunkt des Laserstrahls auf dem Messobjekt verdeutlicht.

4. Entfernungsmessvorrichtung nach Anspruch 3, **dadurch gekennzeichnet, dass** auf dem Display die Visierhilfe in einer Farbe angezeigt wird, die einen vergleichsweise großen Kontrast zu dem auf dem Display angezeigten Bild aufweist, insbesondere wobei die Visierhilfe zumindest teilweise Komplementärfarben von auf dem Display angezeigten Teilbereichen des Bildes aufweist.

5. Entfernungsmessvorrichtung nach einem der Ansprüche 3 oder 4, **dadurch gekennzeichnet, dass** der Benutzer zwischen einer Mehrzahl unterschiedlicher Visierhilfen, insbesondere zwischen einer Mehrzahl unterschiedlicher Absehen, auswählen kann.

6. Entfernungsmessvorrichtung nach einem der Ansprüche 3 bis 5, **dadurch gekennzeichnet, dass** die Visierhilfe auf dem Display von dem Benutzer an unterschiedliche Positionen bewegt werden kann, insbesondere wobei dadurch auch eine Kalibrierung erreicht werden kann.

7. Entfernungsmessvorrichtung nach einem der Ansprüche 1 bis 6, **dadurch gekennzeichnet, dass** der Benutzer zwischen unterschiedlichen Zoomstufen des Displays wechseln kann.

8. Entfernungsmessvorrichtung nach einem der Ansprüche 1 bis 7, **dadurch gekennzeichnet, dass** die Ermittlung der Position des Auftreffpunkts des Laserstrahls auf dem Messobjekt unter Berücksichtigung der Parallaxe erfolgt, die sich durch den Abstand der Kamera von der Austrittsapertur der Laserlichtquelle ergibt.

9. Entfernungsmessvorrichtung nach einem der Ansprüche 1 bis 8, **dadurch gekennzeichnet, dass** die ermittelte Entfernung zwischen der Entfernungsmessvorrichtung und dem Messobjekt auf dem Display angezeigt werden kann.

10. Entfernungsmessvorrichtung nach einem der Ansprüche 1 bis 9, **dadurch gekennzeichnet, dass** ein Bild abgespeichert werden kann, das insbesondere das Messobjekt und die eingeblendete Entfernung zum Messobjekt sowie gegebenenfalls zusätzlich die Visierhilfe zeigt.

11. Entfernungsmessvorrichtung nach einem der Ansprüche 1 bis 10, **dadurch gekennzeichnet, dass** die Entfernungsmessvorrichtung Beschleunigungssensormittel und/oder Neigungssensormittel umfasst.

D1

P1

α

F1

A

Fig. 1

D2

P2

F2

α

A

Fig. 2

X

D1

A/2

α

Fig. 3

X=D1-D2

α

F2

Fig. 4

# Fig. 5

# Fig. 6

Europäisches Patentamt
European Patent Office
Office européen des brevets

# EUROPÄISCHER RECHERCHENBERICHT

Nummer der Anmeldung

EP 18 15 6994

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br>Y | US 2006/125924 A1 (ING-SONG LIN [TW] ET AL) 15. Juni 2006 (2006-06-15)<br>* Absatz [0020] - Absatz [0021] *<br>* Absatz [0025] - Absatz [0027] *<br>* Abbildungen 1-3 *<br>----- | 1-3,5,9,10<br>4,6-8,10,11 | INV.<br>G01S7/02<br>G01S17/08<br>G01S7/497<br>G01S7/51 |
| X<br>Y | US 2016/074724 A1 (TERRE WILLIAM A [US]) 17. März 2016 (2016-03-17)<br>* Absatz [0069] *<br>* Absatz [0236] *<br>* Absatz [0240] *<br>* Absatz [0248] *<br>* Absatz [0253] *<br>* Absatz [0262] *<br>* Absatz [0277] *<br>* Absatz [0281] *<br>* Absatz [0284] - Absatz [0285] *<br>* Abbildungen 1, 17-20 *<br>----- | 1-3,5,7,9<br>4,6-8,10,11 | |
| X<br>Y<br>A | DE 100 55 510 A1 (HILTI AG [LI]) 23. Mai 2002 (2002-05-23)<br>* Spalte 1, Zeile 24 - Zeile 35 *<br>* Spalte 2, Zeile 13 - Zeile 42 *<br>* Spalte 3, Zeile 1 - Zeile 54 *<br>* Abbildung 1 *<br>----- | 1,3,5,6,8,9<br>4,6-8,10,11<br>2 | RECHERCHIERTE SACHGEBIETE (IPC)<br><br>G01S |
| Y | JP 2016 008830 A (TOPCON CORP) 18. Januar 2016 (2016-01-18)<br>* Absatz [0008] - Absatz [0010] *<br>----- | 4 | |

Der vorliegende Recherchenbericht wurde für alle Patentansprüche erstellt

| Recherchenort | Abschlußdatum der Recherche | Prüfer |
|---|---|---|
| München | 3. August 2018 | Köppe, Maro |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

............................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 18 15 6994

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

03-08-2018

| Im Recherchenbericht angeführtes Patentdokument | Datum der Veröffentlichung | Mitglied(er) der Patentfamilie | Datum der Veröffentlichung |
|---|---|---|---|
| US 2006125924 A1 | 15-06-2006 | TW I250793 B<br>US 2006125924 A1 | 01-03-2006<br>15-06-2006 |
| US 2016074724 A1 | 17-03-2016 | KEINE | |
| DE 10055510 A1 | 23-05-2002 | CH 695959 A5<br>DE 10055510 A1<br>JP 2002202127 A<br>US 2002067475 A1 | 31-10-2006<br>23-05-2002<br>19-07-2002<br>06-06-2002 |
| JP 2016008830 A | 18-01-2016 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1407227 B1